# EUROPEAN PATENT APPLICATION

(11) **EP 3 833 102 A1**
(43) Date of publication of application: **09.06.2021**
(21) Application number: 19856315.7
(22) Date of filing: 26.08.2019
(51) Int. Cl.: H04W 36/00

(54) **CELL HANDOVER METHOD, BASE STATION, EMTC TERMINAL, AND STORAGE MEDIUM**

(30) Priority: 27.08.2018 CN 201810979040
(71) Applicant: ZTE Corporation, shenzhen Guangdong 518057 (CN)
(72) Inventor: GUO, Feng, Shenzhen, Guangdong 518057 (CN)
(74) Representative: Betten & Resch
(86) International application number: PCT/CN2019/102449
(87) International publication number: WO 2020/043034

(57) **Abstract**

Disclosed are a cell handover method, a base station, an eMTC terminal and a storage medium, which belong to the technical field of wireless communications. The method may include: acquiring, by a source base station, RSRP threshold list configurations of adjacent cells; issuing a measurement control message to the eMTC terminal; receiving a measurement report from the eMTC terminal, where the measurement report carries RSRP information about the adjacent cells; selecting a target cell according to the RSRP information about the adjacent cells, the RSRP threshold list configurations and the enhanced coverage levels supported by the eMTC terminal; sending a handover request message to a target base station where the target cell is located; and, after receiving a handover request confirmation message from the target base station, sending an RRC connection reconfiguration message to the eMTC terminal. In the embodiments of the present invention, before the handover, the coverage enhanced level of a cell where the eMTC terminal may locate is evaluated, and an appropriate target cell is selected to execute the handover based on the capability of the eMTC terminal, thereby the risk of handover failure can be reduced.

## Description

### CROSS-REFERENCE TO RELATED APPLICATION

This application is filed on the basis of Chinese patent application No. 201810979040.3 filed August 27, 2018, and claims priority of the Chinese patent application, the entire contents of which are incorporated herein by reference.

### TECHNICAL FIELD

Embodiments of the present invention relate to the field of wireless communications, and in particular to a method for cell handover, a base station, an eMTC terminal, and a storage medium.

### BACKGROUND

Low-cost Machine-Type Communication (MTC) terminals have gradually become an important part for operators to increase revenue through mobile cellular network communications. Considering that such MTC terminals have low time delay and low throughput requirements, and most MTCs are only operated under GSM/GPRS, such eMTC terminals have very low requirements. As the LTE network technology gradually matures, operators expect to migrate MTC terminal services from 2G to the LTE network. In the current application scenario, most MTC terminals are located in buildings or deep in network coverage. In the 3GPP R12, the research topic of "low-cost MTC terminals and enhanced coverage" is put forward in order to solve the communication problem under deep coverage, that is, the problem of communication between Bandwidth reduced Low complexity (BL) terminals and Coverage Enhancement (CE) terminals, and the topic is written into the 3GPP R13 standard after discussion. For the convenience of description, the BL terminals and CE terminals are collectively referred to as Enhanced Machine-Type Communication (eMTC) terminals.

According to the 3GPP R13 standard, when accessing a cell, the eMTC terminal selects a Physical Random Access Channel (PRACH) resource according to an initial coverage enhancement level of the cell or a Reference Signal Receiving Power (RSRP) threshold list configured by a base station. If the base station configures the initial coverage enhancement level and a corresponding PRACH configuration, the eMTC terminal initiates an access according to the PRACH resource; otherwise, if not configure the initial coverage enhancement level, the base station configures the RSRP threshold list for the eMTC terminal to select the PRACH resource, and the eMTC terminal determines which RSRP range of coverage enhancement level the eMTC terminal is at according to the measured RSRP of the cell, so as to select a PRACH resource configuration corresponding to the coverage enhancement level and initiate an access.

During the mobile handover across base stations, after the eMTC terminal reports the measurement report, the source base station sends a handover request to a target base station corresponding to the cell to which the measurement report is reported. The target base station issues a handover command including special physical resource configurations such as initial coverage enhancement levels or RSRP threshold lists to the eMTC terminal through the source base station. The eMTC terminal determines the coverage enhancement level in the target cell according to the handover command, and selects a PRACH resource corresponding to the coverage enhancement level to initiate an access.

However, since the source base station cannot know the initial coverage enhancement level or RSRP threshold list configuration of the target base station, the coverage enhancement level of the eMTC terminal in the target cell cannot be evaluated. If the eMTC terminal does not support the coverage enhancement level in the target cell but the source base station still hands over the eMTC terminal to the target cell, it may cause the eMTC terminal to fail to be handed over to and access the target cell.

### SUMMARY

In view of this, embodiments of the present invention provide a method for cell handover, a base station, an eMTC terminal and a storage medium, to deal with the technical problem that the eMTC terminal fails to hand over to and access a target cell because the eMTC terminal does not support the coverage enhancement level in the target cell but the source base station still hands over the eMTC terminal to the target cell.

Technical schemes adopted by the embodiments of the present invention for dealing with the above technical problem are as follows.

According to one aspect of the embodiments of the present invention, there's provided a method for cell handover applied to a source base station, including: acquiring a plurality of reference signal receiving power, RSRP threshold list configurations of a plurality of adjacent cells; issuing a measurement control message to an enhanced Machine-Type Communication, eMTC terminal, where the measurement control message carries a plurality of frequency points of the adjacent cells supporting the eMTC terminal and a plurality of corresponding measurement configurations; receiving a measurement report fed back by the eMTC terminal, where the measurement report carries RSRP information about the adjacent cells; selecting a target cell from the adjacent cells according to the RSRP information about the adjacent cells, the RSRP threshold list configurations of the adjacent cells and a plurality of coverage enhancement levels supported by the eMTC terminal; sending a handover request message to a target base station where the target cell is located; and receiving a handover request acknowledgement message from the target base station, and sending a radio resource control, RRC connection reconfiguration message to the eMTC terminal.

According to another aspect of the embodiments of the present invention, there's provided a method for cell handover, applied to an eMTC terminal, including: in response to a reception of a measurement control message sent by a source base station, measuring an adjacent cell corresponding to a frequency point according to a measurement configuration carried by the measurement control message, and feeding back a measurement report to the source base station, where the measurement report carries RSRP information about the adjacent cell; in response to a reception of an RRC connection reconfiguration message sent by the source base station, desynchronizing from the source base station, and initiating an access according to a PRACH resource corresponding to the coverage enhancement level of a target cell; and sending, after the access is successful, an RRC reconfiguration completion message to a target base station where the target cell is located.

According to yet another aspect of the embodiments of the present invention, there's provided a method for cell handover applied to a target base station, including: receiving a handover request message sent by a source base station, and acquiring a coverage enhancement level carried by the handover request message to perform admission control; and in response to a successful admission, configuring a PRACH resource corresponding to the coverage enhancement level, and sending a handover request acknowledgement message to the source base station.

According to yet another aspect of the embodiments of the present invention, there's provided a base station including a memory, a processor, and a computer program stored in the memory and executable by the processor, when the computer program is executed by the processor, the steps of the above method for cell handover applied to a source base station or the steps of the method for cell handover applied to a target base station are implemented.

According to yet another aspect of the embodiments of the present invention, there's provided an eMTC terminal including a memory, a processor and a computer program stored in the memory and executable by the processor, when the computer program is executed by the processor, the steps of the method for cell handover applied to an eMTC are implemented.

According to yet another aspect of the embodiments of the present invention, there's provided a storage medium having a computer program stored therein, when the computer program is executed by a processor, the steps of any one of the above methods for cell handover are implemented.

### BRIEF DESCRIPTION OF DRAWINGS

Fig. 1 is a structural schematic diagram of an eMTC terminal provided by embodiments of the present invention;
Fig. 2 is a schematic diagram of a wireless communication system architecture provided by embodiments of the present invention;
Fig. 3 is a flowchart showing a method for cell handover applied to a source base station provided by embodiment one of the present invention;
Fig. 4 is an interactive flowchart showing a method for acquiring RSRP threshold list configurations of adjacent cells provided by embodiment one of the present invention;
Fig. 5 is an interactive flowchart showing a method for acquiring RSRP threshold list configurations of adjacent cells provided by embodiment one of the present invention;
Fig. 6 is a flowchart showing a target cell selection method provided by embodiment one of the present invention;
Fig. 7 is a flowchart showing a method for cell handover applied to an eMTC terminal provided by embodiment two of the present invention;
Fig. 8 is a flowchart showing a method for cell handover applied to a target base station provided by embodiment three of the present invention; and
Fig. 9 is an interactive flowchart showing a method for cell handover provided by embodiment four of the present invention.

The implementation, functional features and advantages of the embodiments of the present invention will be further explained with reference to the accompanying drawings.

### DETAILED DESCRIPTION

Technical problems to be dealt with, technical schemes and beneficial effects of the present invention may be clearer and understood from a detailed description of embodiments of the present invention in conjunction with the drawings. It should be understood that the embodiments described herein are used to explain the present invention, and shall not be construed to limit the present invention.

In the following description, the suffixes used to represent elements, such as "modules", "components", or "units" are used only to facilitate the description of the embodiments of the present invention, but are not of particular significance per se. Therefore, "modules", "components", or "units" may be used in a mixed manner.

An eMTC terminal may be implemented in various forms, for example, a BLeMTC terminal or a CEeMTC terminal.

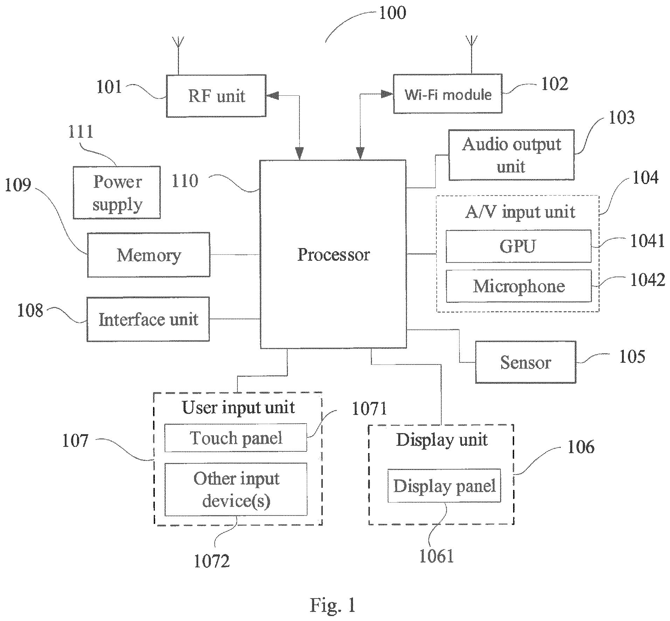

Referring to Fig. 1, FIG. 1 is a schematic diagram of a hardware structure of an eMTC terminal for implementing various embodiments of the present invention. The eMTC terminal 100 may include components such as a Radio Frequency (RF) unit 101, a Wi-Fi module 102, an audio output unit 103, an audio/video (A/V) input unit 104, a sensor 105, a display unit 106, a user input unit 107, an interface unit 108, a memory 109, a processor 110, and a power supply 111. A person skilled in the art may understand that, the structure of the eMTC terminal shown in FIG. 1 does not constitute a limitation on the eMTC terminal, and the eMTC terminal may include more or fewer parts than those shown in the figure, or combine some parts, or have different arrangement of the parts.

With reference to FIG. 1, the following describes compositional parts of the eMTC terminal.

The RF unit 101 may be configured to receive and transmit signals in the process of transmitting and receiving information or during a call. After receiving the downlink information of the base station, the RF unit 101 may transmit the downlink information to the processor 110 for processing. In addition, the uplink data is sent to the base station. In general, the RF unit 101 includes, but is not limited to, an antenna, at least one amplifier, a transceiver, a coupler, a low noise amplifier, a duplexer, and the like. In addition, the RF unit 101 may also communicate with a network and other devices through wireless communication. The above wireless communication may use any communication standard or protocol.

Wi-Fi is a short-range wireless transmission technology. The eMTC terminal can help users send and receive e-mail, browse web pages and access streaming media through the Wi-Fi module 102, which provides users with wireless broadband Internet access. Although the Wi-Fi module 102 is illustrated in FIG. 1, it is understood that the Wi-Fi module 102 is not a mandatory component of the eMTC terminal and may be omitted as necessary without changing the nature of the present invention.

The audio output unit 103 may convert audio data received by the RF unit 101 or the Wi-Fi module 102 or stored in the memory 109 into an audio signal and output as a sound while the eMTC terminal 100 is in a call signal reception mode, a call mode, a recording mode, a voice recognition mode, a broadcast reception mode, or the like. In addition, the audio output unit 103 may also provide audio output related to a specific function performed by the eMTC terminal 100, for example, a call signal reception sound, a message reception sound, and the like. The audio output unit 103 may include a speaker, a buzzer, and the like.

The A/V input unit 104 is configured to receive audio signals or video signals. The A/V input unit 104 may include a graphics processing unit (GPU) 1041 that processes image data of a still picture or video obtained by an image capture device (e.g., a camera) in a video capture mode or an image capture mode, and a microphone 1042. The processed image frame may be displayed on the display unit 106. The image frames processed by the GPU 1041 may be stored in the memory 109 (or other storage media) or transmitted via the RF unit 101 or the Wi-Fi module 102. The microphone 1042 may receive sound (audio data) in a phone conversation mode, a recording mode, a speech recognition mode, or the like, and may process such sound into audio data. The processed audio (voice) data may be converted to a format that may be transmitted to the mobile communication base station via the RF unit 101 in the case of a phone conversation mode. The microphone 1042 may implement various types of noise cancellation or suppression algorithms to cancel or suppress noise or interference generated during reception and transmission of an audio signal.

The eMTC terminal 100 also includes at least one sensor 105, such as a light sensor, a motion sensor, and other sensors.

The display unit 106 is for displaying information input by the user or information provided to the user. The display unit 106 may include a display panel 1061, which may be configured in the form of a liquid crystal display (LCD), an organic light emitting diode (Organic Light-Emitting Diode), or the like.

The user input unit 107 may be configured to receive input numeric or character information, and generate key signal input related to user setting and function control of the eMTC terminal. In particular, the user input unit 107 may include a touch panel 1071 and other input device(s) 1072. The touch panel 1071, also referred to as a touch screen, may collect a touch operation of the user on or near the touch panel 1071 (e.g., an operation of the user on or near the touch panel 1071 using any suitable object or accessory such as a finger, stylus, etc.) and drive the corresponding connection device according to a preset program. The touch panel 1071 may include two parts: a touch detection device and a touch controller. The touch detection device detects the touch orientation of the user, detects a signal from the touch operation, and transmits the signal to the touch controller; the touch controller receives touch information from the touch detection device, converts the touch information into contact coordinates, and sends the contact coordinates to the processor 110, and can receive and execute a command from the processor 110. In addition to the touch panel 1071, the user input unit 107 may include other input device(s) 1072.

Further, the touch panel 1071 may cover the display panel 1061, and when the touch panel 1071 detects a touch operation on or near the touch panel 1071, the touch operation is transferred to the processor 110 to determine the type of touch event, and then the processor 110 provides a corresponding visual output on the display panel 1061 according to the type of touch event. Although the touch panel 1071 and the display panel 1061 implement the input and output functions of the eMTC terminal as two independent components in FIG. 1, in some embodiments, the touch panel 1071 and the display panel 1061 may be integrated to implement the input and output functions of the eMTC terminal, which is not limited herein.

The interface unit 108 functions as an interface for connecting at least one external device to the eMTC terminal 100, and the memory 109 may be used to store software programs and various data.

The memory 109 may mainly include a program storage area and a data storage area, where the program storage area may store an operating system, an application program required by at least one function (such as a sound playing function, an image playing function, etc.), and the like; The data storage area can store data (such as audio data, phone book, etc.) created according to the use of the mobile phone. In addition, the memory 109 may include high-speed random access memory, and may also include non-volatile memory, such as at least one disk storage device, flash memory device, or other volatile solid-state storage device.

The processor 110 is the control center of the eMTC terminal, connects various parts of the entire eMTC terminal by various interfaces and lines, executes various functions of the eMTC terminal and processes data by running or executing software programs and/or modules stored in the memory 109 and invoking data stored in the memory 109, so as to monitor the eMTC terminal as a whole. The processor 110 may include one or more processing units; the processor 110 may integrate an application processor and a modem processor, where the application processor processes an operating system, a user interface, an application program, and the like, and the modem processor processes wireless communication. It can be understood that the above modem processor may not be integrated into the processor 110.

The eMTC terminal 100 may also include a power source 111 (such as a battery) that supplies power to various components. The power source 111 may be logically connected to the processor 110 through a power management system, thereby implementing functions such as charging, discharging, and power consumption management through the power management system.

In order to facilitate understanding of the embodiments of the present invention, a communication network system including the eMTC terminal according to the embodiments of the present invention will be described below.

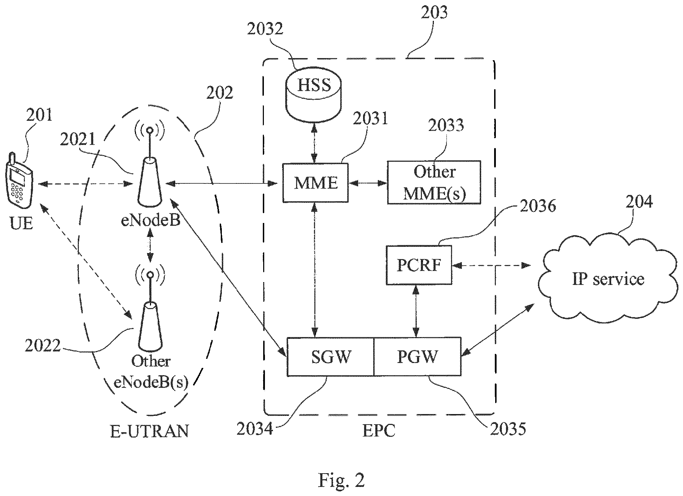

Referring to Fig. 2 which is a schematic diagram of a communication network system architecture provided by an embodiment of the present invention. The communication network system is an LTE system of the universal mobile communication technology, the LTE system includes a User Equipment (UE) 201, an Evolved UMTS Terrestrial Radio Access Network (E-UTRAN) 202, an Evolved Packet Core (EPC) 203, and operator IP services 204.

The UE 201 may be the eMTC terminal 100 described above, which will not be described in detail here.

The E-UTRAN 202 includes an eNodeB 2021 and other eNodeB(s) 2022, where the eNodeB 2021 may be connected with the other eNodeB(s) 2022 through a backhaul (e.g., X2 interface), the eNodeB 2021 is connected to the EPC 203, and the eNodeB 2021 may provide an access from the UE 201 to the EPC 203.

The EPC 203 may include a Mobility Management Entity (MME) 2031, a Home Subscriber Server (HSS) 2032, other MME(s) 2033, a Serving Gate Way (SGW) 2034, a PDN Gate Way (PGW) 2035 and a Policy and Charging Rules Function (PCRF) 2036, where the MME 2031 is a control node that processes signaling between the UE 201 and the EPC 203, and provides bearer and connection management; the HSS 2032 is configured to provide some registers to manage functions of a home location register (not shown in the figure) and the like, and store some user-specific information about service features, data rates, etc.; all user data may be sent through the SGW 2034; the PGW 2035 may provide IP address allocation for the UE 201 and other functions; and the PCRF 2036 is a policy and charging control policy decision point of service data streams and IP bearer resources, which selects and provides available policy and charging control policy for the policy and charging execution function unit (not shown in the figure).

The IP services 204 may include Internet, Intranet, IP Multimedia Subsystem (IMS) or other IP services.

Although the above is described by taking LTE systems as an example, those skilled in the art should know that embodiments of the present invention are not only applicable to LTE systems, but also applicable to other wireless communication systems, such as GSM, CDMA2000, WCDMA, TD-SCDMA and future network systems, which are not limited here.

Based on the hardware structure of the eMTC terminal and the communication network system, various embodiments of the method according to embodiments of the present invention are proposed.

### Embodiment one

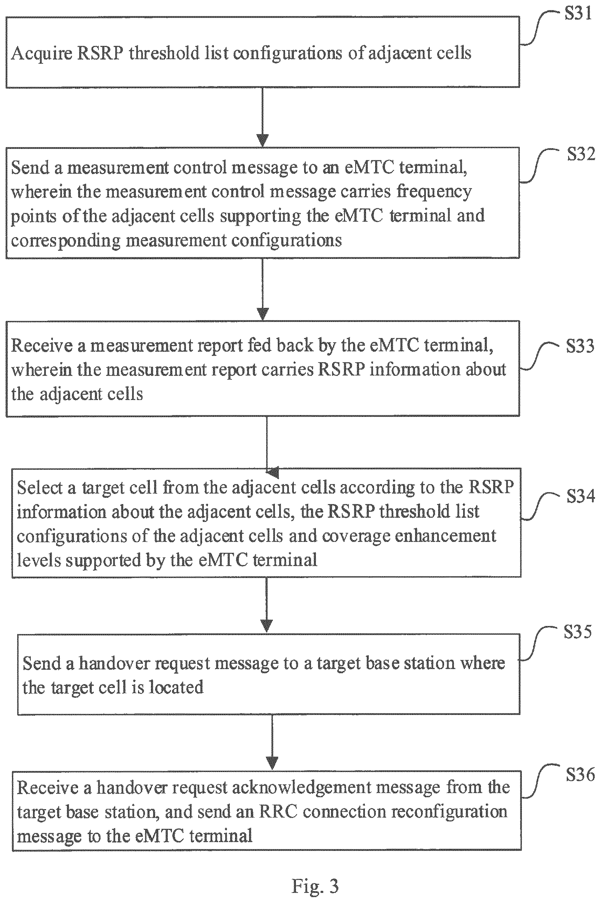

As shown in Fig. 3, a method for cell handover applied to a source base station is provided by an embodiment of the present invention, the method includes the following steps.

S31: Acquiring reference signal receiving power (RSRP) threshold list configurations of adjacent cells.

After the eMTC terminal selects an appropriate PRACH resource to access the source base station, the source base station acquires the RSRP threshold list configurations of the adjacent cells to determine whether the adjacent cells support the eMTC terminal. The acquisition method includes, but is not limited to, acquiring the RSRP threshold list configurations of the adjacent cells through an X2 interface, a base station configuration update message or a network management platform.

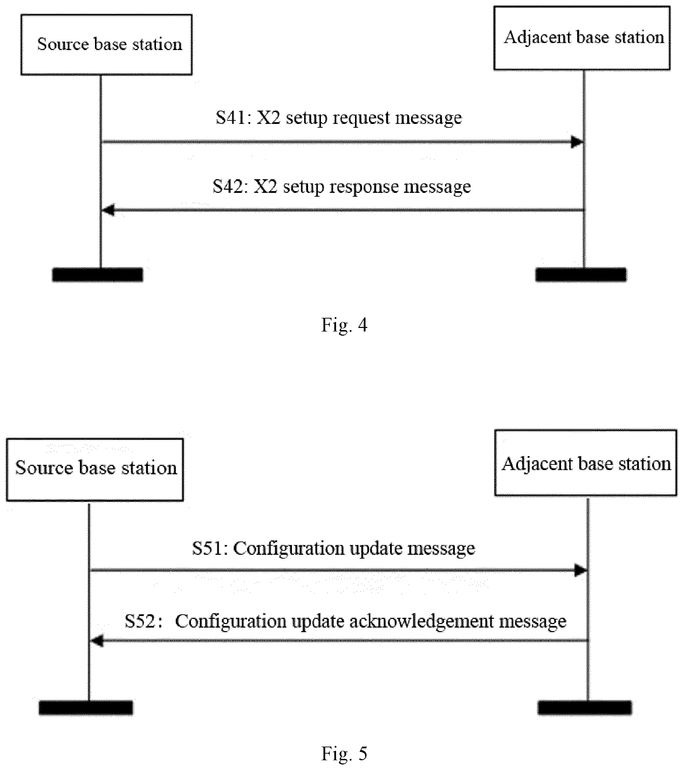

As shown in Fig. 4, a method for acquiring RSRP threshold list configurations through an X2 interface, applied in an X2 setup process, includes the following steps.

S41: Adding, by the source base station, the RSRP threshold list configuration of each cell to a PRACH configuration, and sending the PRACH configuration to an adjacent base station through an X2 setup request message.

S42: Receiving an X2 setup response message fed back by the adjacent base station, and then acquiring the RSRP threshold list configuration of each cell of the adjacent base station from the PRACH configuration of the X2 setup response message.

During the X2 setup process, the source base station adds RSRP threshold lists of all cells (such as SourceCelll) to a PRACH configuration information element (IE), sends the PRACH configuration IE to the adjacent base station through an X2 setup request message (X2 SETUP REQUEST->Served Cell Information-> PRACH Configuration-> RSRP threshold list), the adjacent base station adds RSRP threshold list configurations of all cells of the adjacent base station (such as adjacent cell 2 and adjacent cell 3) to the PRACH configuration IE, and sends the PRACH configuration IE to the source base station through an X2 setup response message (X2 SETUP RESPONSE->Served Cell Information-> PRACH Configuration-> RSRP threshold list). In this way, the source base station sends the RSRP threshold list configurations of the cells of the source base station to the adjacent base station through the X2 setup request, and the adjacent base station sends the RSRP threshold list configurations of the cells of the adjacent base station to the source base station through the X2 setup response message, so that both the source base station and the adjacent base station may obtain the RSRP threshold list configurations of all cells of each other separately.

As shown in Fig. 5, a method for acquiring RSRP threshold list configurations of all cells of an adjacent base station in the base station configuration update process includes the following steps.

S51: Adding, by the source base station, the RSRP threshold list configuration of each cell to a PRACH configuration, and sending the PRACH configuration to the adjacent base station through the configuration update message.

S52: Receiving a configuration update acknowledgement message of the adjacent base station, and then acquiring the RSRP threshold list configuration of each cell of the adjacent base station from the PRACH configuration of the configuration update acknowledgement message.

If the information about a cell is changed, the cell will inform other base station connecting therewith via X2 of the change through the base station configuration update message. If an RSRP threshold list configuration of the source base station is changed, the source base station (such as SourceCelll) adds the RSRP threshold list to the PRACH configuration IE during the base station configuration update process, sends the PRACH configuration IE to an adjacent base station through a configuration update message (ENB CONFIGURATION UPDATE-> Served Cell Information-> PRACH Configuration-> RSRP threshold list). After receiving the configuration update message, the adjacent base station feeds back a configuration update acknowledgement message to the source base station for acknowledgement, where the adjacent base station adds the RSRP threshold list configurations of all cells of the adjacent base station (such as adjacent cell 2 and adjacent cell 3) to the PRACH configuration IE, and sends the PRACH configuration IE to the source base station through the configuration update acknowledgement message. In this way, after the RSRP threshold list configuration of the cell is changed, the cell tells the change to other base station having x2 connection setup therewith through the base station configuration update message, and the other base station feeds back the configuration update acknowledgement message to the source base station for acknowledgement, and adds the RSRP threshold list configurations of all cells of the other base station (such as the adjacent cell 2 and the adjacent cell 3) to the PRACH configuration IE and sends the PRACH configuration IE to the source base station. Both the source base station and the adjacent base station may obtain the RSRP threshold list configurations of all cells of each other separately.

Similarly, if the configuration of the adjacent base station is changed, a configuration update message may be sent to the source base station through the configuration update process. The source base station feeds back to the adjacent base station the configuration update acknowledgement message carrying the RSRP threshold list configurations of all cells of the source base station.

In addition, in the method for acquiring the RSRP threshold list configurations of adjacent cells through a network management platform, the network management platform adds, the RSRP threshold list configuration attributes of adjacent base station cells having an adjacent cell relationship with a serving cell of the source base station, to the list of adjacent cells of the source base station. The source base station may acquire RSRP threshold list configuration attributes of all adjacent cells of the adjacent base station while acquiring the list of adjacent cells from the network management platform.

S32: Issuing a measurement control message to the eMTC terminal, where the measurement control message carries frequency points of the adjacent cells supporting the eMTC terminal and corresponding measurement configurations.

After obtaining the RSRP threshold list configurations of the adjacent cells, the source base station judges whether the adjacent cells support the eMTC terminal according to a supporting capability of the eMTC terminal, and issues a measurement control message carrying frequency points of the adjacent cells and corresponding measurement configurations to the eMTC terminal if there are adjacent cells supporting the eMTC terminal.

S33: Receiving a measurement report from the eMTC terminal, where the measurement report carries RSRP information about the adjacent cells.

S34: Selecting a target cell according to the RSRP information about the adjacent cells, the RSRP threshold list configurations of the adjacent cells and coverage enhancement levels supported by the eMTC terminal.

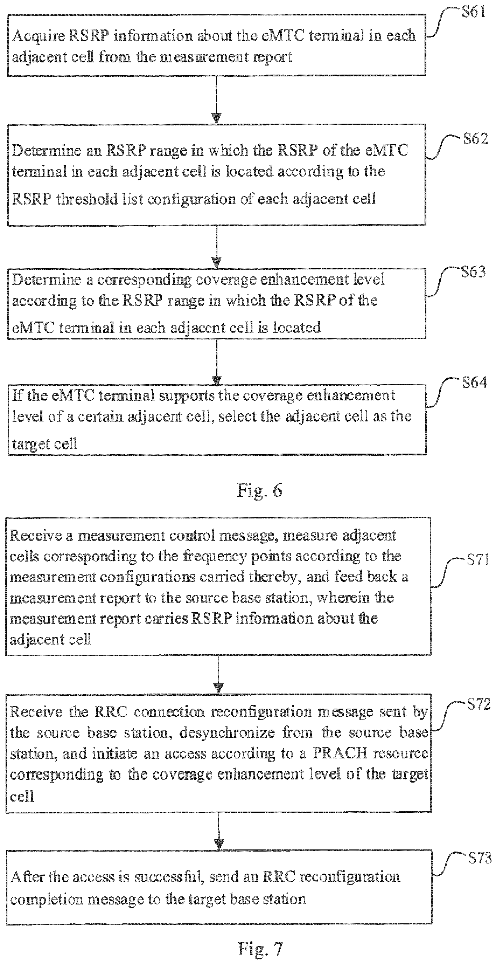

Referring to Fig. 6, a target cell selection method for the step of S34 includes the following steps.

S61: Acquiring RSRP information about the eMTC terminal in each adjacent cell from the measurement report.

S62: Determining an RSRP range in which the RSRP of the eMTC terminal in each adjacent cell is located according to the RSRP threshold list configuration of each adjacent cell.

S63: Determining a corresponding coverage enhancement level according to the RSRP range in which the RSRP of the eMTC terminal in each adjacent cell is located.

S64: If the eMTC terminal supports the coverage enhancement level of a certain adjacent cell, selecting the adjacent cell as the target cell.

The source base station acquires RSRP information about all adjacent cells from the measurement report reported by the eMTC terminal, and determines an RSRP range in which the RSRP of the eMTC terminal in each adjacent cell is located in combination with the RSRP threshold list configurations of the adjacent cells, and then determines that the coverage enhancement level corresponding to the RSRP range is the coverage enhancement level of the eMTC terminal in each adjacent cell. The method for judging the RSRP range in which the RSRP of each cell is located is already defined in the 3GPP 36.321 protocol, which will not be described in detail here. If the eMTC terminal supports the coverage enhancement level of a certain adjacent cell, the adjacent cell is selected as the target cell.

S35: Sending a handover request message to the target base station where the target cell is located.

After selecting the target cell, the source base station sends a handover request message to the base station where the target cell is located, the handover request message carries information including target cell identifier, target base station identifier, coverage enhancement levels supported by the eMTC terminal.

S36: Receiving a handover request acknowledgement message from the target base station, and sending an RRC connection reconfiguration message to the eMTC terminal.

After receiving the handover request message sent by the source base station, the target base station acquires the coverage enhancement levels supported by the eMTC terminal and performs admission control. If the admission is successful, physical resource configurations of corresponding coverage enhancement levels are prepared, and a handover command is included in the handover request acknowledgement message and then is sent to the source base station, where the handover request acknowledgement message carries the coverage enhancement level or RSRP threshold list configuration of the target cell. After receiving the handover request acknowledgement message, the source base station forwards the handover command to the eMTC terminal through the RRC connection reconfiguration message.

With the method provided by embodiments of the present invention, the coverage enhancement level of the eMTC terminal in the adjacent cell is evaluated through the PRACH configurations of cells acquired by the source base station before handover in combination with the RSRP information about the cells reported by the eMTC terminal, and an appropriate target cell is selected for the eMTC terminal in combination with the coverage enhancement levels supported by the eMTC terminal, thereby avoiding the eMTC terminal from failing to hand over to and access the target cell due to the fact that the eMTC terminal does not support the coverage enhancement level in the target cell, but the source base station still hands over the eMTC terminal to the target cell, and thus reducing the handover failure rate of the eMTC terminal.

### Embodiment two

As shown in Fig. 7, a method for cell handover applied to an eMTC terminal provided by an embodiment of the present invention includes the following steps.

S71: Receiving the measurement control message sent by the source base station, measuring adjacent cells corresponding to the frequency points according to the measurement configurations carried by the measurement control message, and feeding back a measurement report to the source base station, where the measurement report carries RSRP information about the adjacent cells.

After receiving the measurement control message sent by the source base station, the eMTC terminal performs corresponding measurements on the adjacent cells corresponding to the frequency points according to the measurement configurations carried in the measurement control message, and reports measurement results to the source base station if the measurement results meet the reporting configuration, but does not report if the measurement results do not meet the reporting configuration.

S72: Receiving the RRC connection reconfiguration message sent by the source base station, desynchronizing from the source base station, and initiating an access to the target cell according to a PRACH resource corresponding to the coverage enhancement level configured by the target base station.

The eMTC terminal receives the RRC connection reconfiguration message sent by the source base station, and acquires the handover command carried in the RRC connection reconfiguration message, the command containing the coverage enhancement level configured by the target base station, and the eMTC terminal desynchronizes from the source base station and initiates an access to the target cell according to the PRACH resource corresponding to the coverage enhancement level configured by the target base station.

S73: After the access is successful, sending an RRC reconfiguration completion message to the target base station.

In embodiments of the present invention, because the target cell for handover is selected by the source base station according to the measurement results reported by the eMTC terminal, the coverage enhancement level of the target cell and the capability of the eMTC terminal, the cell handover failure can be avoided.

### Embodiment three

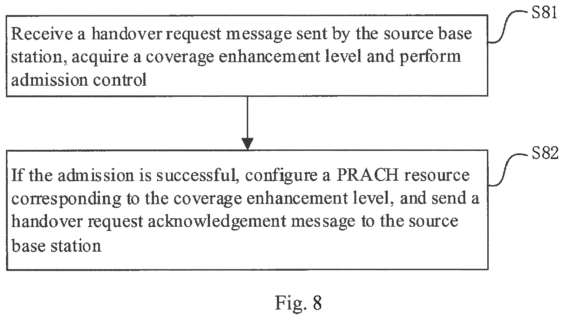

As shown in Fig. 8, a method for cell handover applied to a target base station provided by an embodiment of the present invention includes the following steps.

S81: Receiving a handover request message sent by the source base station, and acquiring a coverage enhancement level and performing admission control.

The target base station receives a handover request message sent by the source base station, acquires a coverage enhancement level, and performs admission control according to the coverage enhancement level and the resource situation of the target cell. If the admission is successful, a physical resource configuration corresponding to a coverage enhancement level is prepared, and the handover command is included in the handover request acknowledgement message and then sent to the source base station; if the admission is unsuccessful, an admission failure message is sent to the source base station.

S82: If the admission is successful, configuring a PRACH resource corresponding to the coverage enhancement level, and sending a handover request acknowledgement message to the source base station.

### Embodiment four

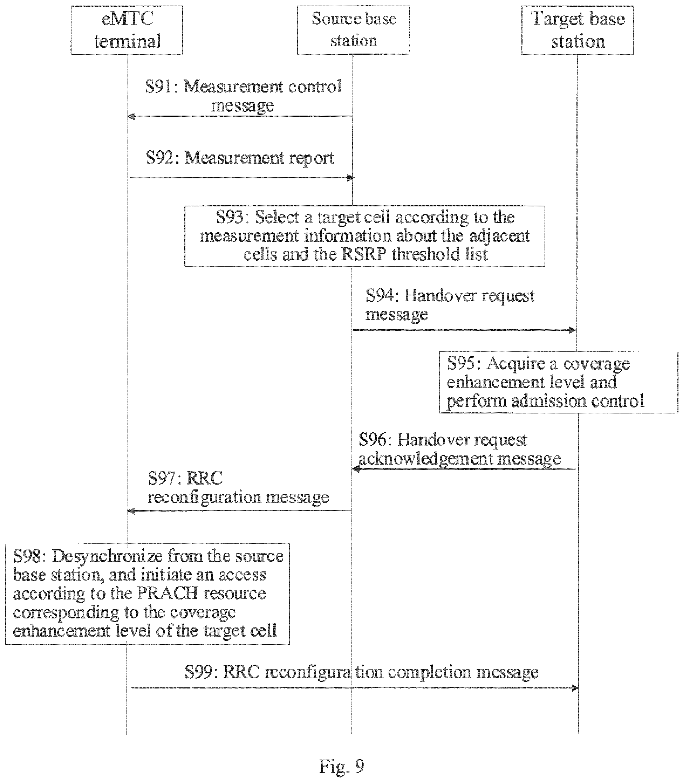

As shown in Fig. 9, a method for cell handover provided by an embodiment of the present invention includes the following steps.

S91: Sending, by the source base station, a measurement control message to the eMTC terminal.

After the eMTC terminal selects an appropriate PRACH resource to access the source base station, according to the acquired RSRP threshold list configurations of the adjacent cells, the source base station issues measurement configurations corresponding to the frequency points of the adjacent cells to the eMTC terminal if there are adjacent cells supporting eMTC attributes.

S92: Sending, by the eMTC terminal, a measurement report to the source base station.

S93: Selecting, by the source base station, a target cell according to the measurement information about the adjacent cells and the RSRP threshold list.

In this embodiment, it is assumed that the RSRP threshold list contains three RSRP thresholds, namely threshold 1, threshold 2 and threshold 3; if the RSRP value of the cell measured by the terminal is less than threshold 3, the terminal is judged to be at the cell CE level 3; otherwise, if the RSRP value of the cell measured by the terminal is less than the threshold 2, the terminal is judged to be at the CE Level 2; otherwise, if the RSRP value of the cell measured by the terminal is less than the threshold 1, the terminal is judged to be at the CE Level 1; otherwise, the terminal is judged to be at the cell CE Level 0.

For example, the three thresholds in the RSRP threshold list of the adjacent cell 2 acquired by the source base station are: threshold 1=-110dBm, threshold 2=-120dBm, and threshold 3 =-130 dBm; and the acquired three thresholds in RSRP threshold list of the adjacent cell 3 are: threshold 1=-110dBm, threshold 2=-120dBm and threshold 3=-130dBm. The source base station issues the measurement configurations of corresponding frequency points of the adjacent cell 2 and the adjacent cell 3 to the eMTC terminal. The eMTC terminal measures and reports that channel qualities of the adjacent cell 2 and the adjacent cell 3 are: RSRP2=-115dBm and RSRP3=-125dBm respectively. If the source base station judges that RSRP2 is less than the threshold 1 of the configuration of the adjacent cell 2 and greater than the threshold 2, it is judged that the eMTC terminal is at the CE Level 1 of the adjacent cell 2; and if judges that RSRP3 is smaller than the threshold 2 of the configuration of the adjacent cell 3 and greater than the threshold 3, it is judged that the eMTC terminal is at the CE Level2 of the adjacent cell 3. If the eMTC terminal capability only supports Mode A (that is, supports the CE Level 0 and the CE Level 1) and does not support Mode B (that is, supports the CE Level 2 and the CE Level3), in order to avoid handover failure, the adjacent cell 2 is selected as the handover target cell for the terminal, and the adjacent cell 3 is not selected as the handover target cell.

It should be noted that the above example only enumerates that the threshold lists of RSRP of configurations of adjacent cells are the same, but the RSRP threshold list configurations are not limited thereto in practical application, and is also applicable to a case where the RSRP threshold list configurations of adjacent cells are different.

S94: Sending, by the source base station, a handover request message to the target base station where the target cell is located.

The source base station selects an appropriate target cell according to the RSRP measurement information reported by the terminal and the PRACH resource configurations (such as RSRP threshold lists) of the adjacent cells, and sends a handover request message to the base station corresponding to the target cell.

S95: Acquiring, by the target base station, a coverage enhancement level and performing admission control.

S96: Sending, by the target base station, a handover request acknowledgement message to the source base station.

S97: Sending, by the source base station, an RRC reconfiguration message to the eMTC terminal.

S98: Desynchronizing from the source base station, and initiating an access according to the PRACH resource corresponding to the coverage enhancement level of the target cell.

S99: Sending, by the eMTC terminal, an RRC reconfiguration completion message to the target base station.

### Embodiment five

Embodiments of the present invention provide a base station, including a memory, a processor, and a computer program stored in the memory and running on the processor. When the computer program is executed by the processor, the steps of the method for cell handover of the embodiment one, embodiment three or embodiment four are implemented.

It should be noted that the base station in this embodiment belongs to the same concept as the embodiment one, embodiment three and embodiment four of the above method for cell handover, the technical features in the method embodiments are applicable to the base station in this embodiment, and the implementation process is detailed in the method embodiments, which will not be repeated here.

### Embodiment six

Embodiments of the present invention provide an eMTC terminal, including a memory, a processor and a computer program stored in the memory and running on the processor. When the computer program is executed by the processor, the steps of the method for cell handover of embodiment two are implemented.

It should be noted that the eMTC terminal in this embodiment belongs to the same concept as the embodiment two of the method for cell handover, the technical features in the method embodiments are applicable to the eMTC terminal in this embodiment, and the implementation process is detailed in the method embodiments, which will not be repeated here.

In addition, embodiments of the present invention further provide a computer readable storage medium, on which a computer program is stored. When the computer program is executed by the processor, the steps of the method for cell handover in any one of the above embodiments one to four is implemented.

It should be noted that the computer readable storage medium belongs to the same concept as the embodiments of the above method for cell handover, the implementation process is detailed in the method embodiments, and the technical features in the method embodiments are applicable to both equipment and computer readable storage medium, which will not be repeated here.

According to the method for cell handover, base station, eMTC terminal and storage medium provided by embodiments of the present invention, the coverage enhancement level of the eMTC terminal in the reported cell is evaluated through the PRACH configurations of cells acquired by the source base station before handover in combination with the RSRP information about the cells reported by the eMTC terminal, and an appropriate target cell is selected for the eMTC terminal in combination with the coverage enhancement levels supported by the eMTC terminal, thereby avoiding that the eMTC terminal fails to hand over to and access the target cell due to the fact that the eMTC terminal does not support the coverage enhancement level in the target cell, but the source base station still hands over the eMTC terminal to the target cell, and thus reducing the handover failure rate of the eMTC terminal.

Those of ordinary skill in the art will appreciate that all or some of the steps in the methods, systems and devices disclosed above may be implemented as software, firmware, hardware, and suitable combinations thereof.

In a hardware implementation, the division between functional blocks/elements mentioned in the above description does not necessarily correspond to the division of physical components; for example, one physical component may have multiple functions, or one function or step may be co-executed by several physical components. Some or all of the components may be implemented as software executed by a processor, such as a central processing unit, digital signal processor or microprocessor, or as hardware, or as an integrated circuit, such as an application specific integrated circuit. Such software may be distributed on a computer readable medium, which may include computer storage media (or non-transitory media) and communication media (or transitory media). As is well known to those of ordinary skill in the art, the term computer storage medium includes volatile and nonvolatile, removable and non-removable media implemented in any method or technology for storing information (such as computer readable instructions, data structures, program modules or other data). Computer storage media includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage device, or may any other medium used to store desired information and that can be accessed by a computer. Moreover, it is well known to those of ordinary skill in the art that communication media typically includes computer readable instructions, data structures, program modules, or other data in a modulated data signal, such as a carrier wave or other transport mechanism, and may include any information delivery media.

Several embodiments of the present invention have been described above with reference to the accompanying drawings, however, the scope of the embodiments of the present invention are not limited to these embodiments. Any modifications, equivalent substitutions and improvements made by those skilled in the art without departing from the scope and nature of the embodiments of the present invention shall be still within the scope of the embodiments of the present invention.

## Claims

1. A method for cell handover, applied to a source base station, comprising:
acquiring a plurality of reference signal receiving power, RSRP threshold list configurations of a plurality of adjacent cells;
issuing a measurement control message to an enhanced Machine-Type Communication, eMTC terminal, wherein the measurement control message carries a plurality of frequency points of the adjacent cells supporting the eMTC terminal and a plurality of corresponding measurement configurations;
receiving a measurement report fed back by the eMTC terminal, wherein the measurement report carries RSRP information about the adjacent cells;
selecting a target cell from the adjacent cells according to the RSRP information about the adjacent cells, the RSRP threshold list configurations of the adjacent cells and a plurality of coverage enhancement levels supported by the eMTC terminal;
sending a handover request message to a target base station where the target cell is located; and
receiving a handover request acknowledgement message from the target base station, and sending a radio resource control, RRC connection reconfiguration message to the eMTC terminal.

2. The method for cell handover of claim 1, wherein the step of acquiring the RSRP threshold list configurations of the adjacent cells comprises:
acquiring the RSRP threshold list configurations of the adjacent cells through an X2 interface, a base station configuration update message or a network management platform.

3. The method for cell handover of claim 2, wherein the step of acquiring the RSRP threshold list configurations of the adjacent cells through the X2 interface comprises:
adding, by the source base station, a RSRP threshold list configuration of each cell of the source base station to a physical random access channel, PRACH configuration, and sending the PRACH configuration to an adjacent base station through an X2 setup request message; and
receiving an X2 setup response message fed back by the adjacent base station, and then acquiring a RSRP threshold list configuration of each cell of the adjacent base station from the PRACH configuration in the X2 setup response message.

4. The method for cell handover of claim 2, wherein the step of acquiring the RSRP threshold list configurations of the adjacent cells through the base station configuration update message comprises:
adding, by the source base station, a RSRP threshold list configuration of each cell of the source base station to a PRACH configuration, and sending the PRACH configuration to an adjacent base station through the configuration update message; and
receiving a configuration update acknowledgement message of the adjacent base station, and then acquiring a RSRP threshold list configuration of each cell of the adjacent base station from the PRACH configuration of the configuration update acknowledgement message.

5. The method for cell handover of claim 2, wherein the step of acquiring the RSRP threshold list configurations of the adjacent cells through a network management platform comprises:
acquiring, by the source base station, a list of adjacent cells from the network management platform, and acquiring RSRP threshold list configuration attributes of all adjacent cells in the list of adjacent cells,
wherein the RSRP threshold list configuration attributes of the adjacent cells are added to the list of adjacent cells by the network management platform.

6. The method for cell handover of any one of claims 1-5, wherein the step of selecting a target cell from the adjacent cells according to the RSRP information about the adjacent cells, the RSRP threshold list configurations of the adjacent cells and coverage enhancement levels supported by the eMTC terminal comprises:
acquiring RSRP information about the eMTC terminal in each adjacent cell from the measurement report;
determining an RSRP range in which the RSRP of the eMTC terminal in each adjacent cell is located according to the RSRP threshold list configuration of each adjacent cell;
determining a corresponding coverage enhancement level according to the RSRP range in which the RSRP of the eMTC terminal in each adjacent cell is located; and
in response to the eMTC terminal supporting the coverage enhancement level of a certain adjacent cell, selecting the adjacent cell as the target cell.

7. A method for cell handover, applied to an eMTC terminal, comprising:
in response to a reception of a measurement control message sent by a source base station, measuring an adjacent cell corresponding to a frequency point according to a measurement configuration carried by the measurement control message, and feeding back a measurement report to the source base station, wherein the measurement report carries RSRP information about the adjacent cell;
in response to a reception of an RRC connection reconfiguration message sent by the source base station, desynchronizing from the source base station, and initiating an access according to a PRACH resource corresponding to the coverage enhancement level of a target cell; and
sending, after the access is successful, an RRC reconfiguration completion message to a target base station where the target cell is located.

8. A method for cell handover, applied to a target base station, comprising:
receiving a handover request message sent by a source base station, and acquiring a coverage enhancement level carried by the handover request message to perform admission control; and
in response to a successful admission, configuring a PRACH resource corresponding to the coverage enhancement level, and sending a handover request acknowledgement message to the source base station.

9. Abase station, comprising a memory, a processor, and a computer program stored in the memory and executable by the processor, wherein when the computer program is executed by the processor, the steps of the method for cell handover of any one of claims 1-6 or the steps of the method for cell handover of claim 8 are implemented.

10. An eMTC terminal, comprising a memory, a processor and a computer program stored in the memory and executable by the processor, wherein when the computer program is executed by the processor, the steps of the method for cell handover of claim 7 are implemented.

11. A storage medium having a computer program stored therein, wherein when the computer program is executed by a processor, the steps of the method for cell handover of any one of claims 1-8 are implemented.
